# EUROPEAN PATENT APPLICATION

(11) **EP 4 792 639 A1**
(43) Date of publication of application: **19.08.2026**
(21) Application number: 25158411.6
(22) Date of filing: 17.02.2025
(51) Int. Cl.: A01D 46/30

(54) **A ROBOTIC SYSTEM FOR MANIPULATION OF OBJECTS**

(71) Applicant: Ecole Polytechnique Fédérale de Lausanne (EPFL), 1015 Lausanne (CH)
(72) Inventor: Cheng, Hung Hon, 1024 ECUBLENS VD (CH); Hughes, Josie, 1025 ST-SULPICE VD (CH)
(74) Representative: Gsmart

(57) **Abstract**

The present invention concerns a robotic system for manipulation of objects, for example harvesting agricultural products, comprising at least one robot that comprises at least one end-effector movable in space by at least one arm, said end-effector being suitable holding and/or cropping objects such as agricultural products, at least one camera to capture images of the environment of the robot and at least one processing unit controlling the movements of the end-effector and said arm, based on images of said camera and on a predetermined manipulation task, said system being characterized in that it comprises at least one support tensioned between at least two spaced-apart holders and on which said at least one robot is hanging, at least one motor for driving relative movements between said robot and parallel portions of said at least one support.

## Description

### Field of the invention

The present invention relates to the field of robotics and preferably concerns a method and/or a system for manipulation of objects, by a robot. In particular, the present invention was designed for the harvesting of biological products such as fruits or vegetables, but it is not limited to such applications even if it is particularly advantageous for such harvesting.

Research in agricultural robotics has predominantly focused on mobile platforms capable of operating close to crops and performing complex tasks, including advanced manipulation with interactive features like soft fruit harvesting.

### Background of the invention

Many robots are known for manipulating objects and in particular for harvesting biological products. Agricultural robotics researches have been largely focused on using mobile platforms that can work near crops and perform advanced manipulation, particularly with interactive features such as harvesting soft fruit. Currently, Unmanned Ground Vehicles (UGVs) are employed for harvesting, while Unmanned Aerial Vehicles (UAVs) are utilized for yield estimations and monitoring. However, despite their widespread use, UGVs and UAVs encounter challenges such as localization, collaborative control, particularly in large-scale farming operations.

Cable-driven parallel robots (CDPRs) also offer various solutions for applications requiring large workspaces operation, as demonstrated in projects like SkyCam recorder system, CU-brick, and the Aerial towing robot. Such robotic systems are terrain-independent and provide precise position feedback, a capability that current UGVs and UAVs cannot match. Despite the advantages of CDPR systems, a common limitation is that most CDPRs can only employ a single robot or end-effector, regardless of the size of the workspace. This limitation is a result of the decreasing collision-free workspace as more cables are introduced. Consequently, this setup requires either changing the end-effector for different functionalities or rearranging the cables' layout, limiting its efficiency and adding complexity to the robotic system. Alternatively, employing suspended CDPRs presents a potential solution to avoid collisions and reduce the system's complexity. However, the workspace of suspended robots often takes the shape of an inverted pyramid, creating significant unreachable areas near ground-level crops. Furthermore, instability in suspended robots can lead to a lack of precision if not effectively managed through iterative, real-time, and precise force control methods, along with meticulous calibration processes. These inherent challenges exacerbate existing issues of suspended CDPRs utilized in agricultural settings, ultimately impeding the efficiency and scalability of these systems. An example of robot addressing such problem has been disclosed in an article titled "AgroCableBot: Reconfigurable Cable-Driven Parallel Robot for Greenhouse or Urban Farming Automation". This article discusses the development of AgroCableBot, a reconfigurable cable-driven parallel robot designed for automating agricultural tasks in greenhouses or urban farming environments. However, this solution still has many drawbacks like reconfiguration complexity, limited precision. Furthermore, only one mobile platform (end-effector) can be deployed for large space and the robot's stability and the reachable area is limited.

### Summary of the invention

One purpose of the present invention is to overcome the drawbacks of the prior art by addressing at least one of the main problems encountered in the deployment of harvesting robots.

This purpose is reached by a robotic system for manipulation of objects, for example harvesting agricultural products, comprising at least one robot that comprises at least one end-effector movable in space by at least one arm, said end-effector being suitable holding and/or cropping objects such as agricultural products, at least one camera to capture images of the environment of the robot and at least one processing unit controlling the movements of the end-effector and said arm, based on images of said camera and on a predetermined manipulation task, said system being characterized in that it comprises at least one support tensioned between at least two spaced-apart holders and on which said at least one robot is hanging, at least one motor for driving relative movements between said robot and parallel portions of said at least one support.

According to another feature, the system comprises at least two robots synergically controlled by said at least one processing unit.

According to another feature, said parallel portions are formed by parts of at least a first support and a second support stationary tensioned between said holders, and in that said robot comprises said motor bidirectionally driving at least one first wheel for displacing said robo along said first support, and at least one second wheel for stabilizing said robot by running on said second support.

According to another feature, said parallel portions are formed by parts of a running cable movably tensioned between at least one first pulley driven by said motor and at least one second pulley, said robot comprising at least one switching clamp for alternatively clamping or releasing one of said parallel portions running in opposite directions, for displacing said robot on either one of said opposite directions.

According to another feature, said robot comprises at least two first stabilizing wheels freely rolling on said running cable, each on one of said parallel portions, for stabilizing said robot.

According to another feature said robot characterized in that it further comprises a stabilizing support stationary tensioned between said holders and in that said robot comprises at least one second stabilizing wheel freely rolling on said stabilizing support during displacements of said robot along said parallel portions.

According to another feature, said robot further comprises a stabilizing clamp for alternatively clamping or releasing said stabilizing support, when said switching clamp respectively releases or clamps one of said parallel portions running in opposite directions.

According to another feature, said robot comprises a second camera on said arm or said end-effector, for enabling said processing unit to control the manipulation at the end-effector.

According to another feature, said end-effector is exchangeable on said arm, for varying the manipulation tasks performed by said robot.

According to another feature, said at least one support tensioned between said spaced-apart holders is movable along the vertical direction, by at least one winch at each of said holders, controlled by said processing unit.

According to another feature, said holders are mobile and controlled by said processing unit, to displace said system in its environment and to position said robot at a location where manipulation of objects is desired.

### Brief description of the drawings

Various technical features and advantages of the present invention will appear more clearly by reading the description of various examples of embodiments below, made in reference to the illustrative and non-limiting drawings, among which:
[Fig 1] Figure 1 show a side view of a robotic system for manipulation of objects according to some embodiments of the present invention;
[Fig 2] Figures 2a and 2b show perspective views of two embodiments of robotic systems comprising robots suspended on pairs of supports which are, respectively, horizontally aligned and vertically aligned;
[Fig 3] Figure 3 shows a perspective view of some embodiments of a system comprising vertically aligned running cables;

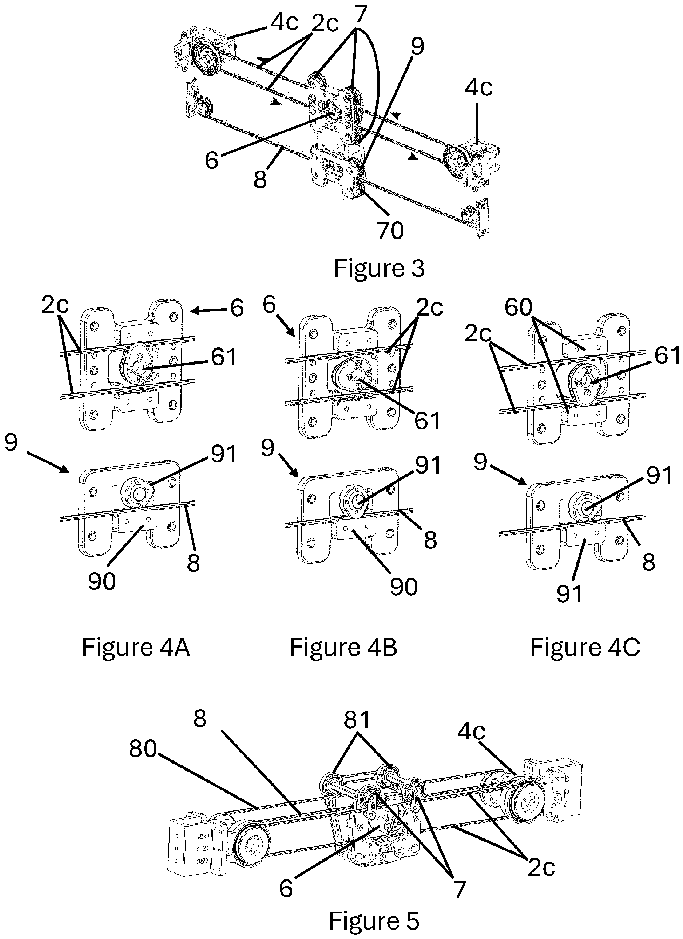

[Fig 4] Figures 4a, 4b and 4c show perspective views of a switch clamp mechanism for moving a robot in the upper part and of stabilizing clamp in the lower part, according to some embodiments, Figure 4a showing said clamping mechanism in a position clamping the upper support formed by a running cable for moving in a first direction, Figure 4b showing said clamping mechanism in a position releasing both supports formed by two parallel portions of a running cable, for not moving along the running cable while the stabilization clamp is clamping another cable for staying stationary and Figure 4c showing said clamping mechanism in a position clamping the lower formed by a running cable for moving in a second direction ;
[Fig 5] Figure 5 shows part of a robotic system according to some embodiments in which a stabilization support is stationary aligned parallel to one section of a support formed by a running cable, stabilization wheels of the robot cooperating with said stabilization cable to improve the stability of the robot;
[Fig 6] Figure 6 shows schematic drawings of some embodiments of robotic systems comprising, in the left part, robots equipped with motorized wheels and, in the right part, robots equipped with image acquisition and communication devices, according to some embodiments;
[Fig 7] Figure 7 shows a robotic system with several robots on the same supports;
[Fig 8] Figures 8a and 8b show perspective views of a robot comprising motorized wheels according to some embodiments of a robotic system and 8c shows a side view and this robot;
[Fig 9] Figure 9 shows a side schematic view of a robotic system for manipulation of objects in an example of environment comprising objects to manipulate which are located at various heights, the system comprising lifting motors for adjusting the height of the supports according to some embodiments;
[Fig 10] Figure 10 show a perspective schematic view drawing of a robotic system for manipulation of objects distributed in a flat horizontal and extended field, with a motorization of the holders holding the supports for displacing the supports and robots along at least one direction of this field.

### Detailed description of embodiments

The present invention concerns a robotic system for manipulation of objects, for example harvesting agricultural products, comprising at least one robot (1) that comprises at least one end-effector (10) movable in space by at least one arm (11), said end-effector (10) being suitable holding and/or cropping objects such as agricultural products, at least one camera (12) to capture images of the environment of the robot (1) and at least one processing unit (13) controlling the movements of the end-effector (10) and said arm (11), based on images of said camera (12) and on a predetermined manipulation task, said system being characterized in that it comprises at least one support (2a, 2b, 2c) firmly attached between at least two spaced-apart holders (3) and on which said at least one robot (1) is hanging, at least one motor (4a, 4b, 4c, 4d) for driving relative movements between said robot (1) and parallel portions of said at least one support (2a, 2b, 2c).

In a general manner, the robotic system comprises at least two robots (1) synergically controlled by said at least one processing unit (13). It will be understood by reading the present application and in particular the two following paragraphs, that the term support can in fact designate a rigid structure such as a rod or a rail, firmly held between the holders or can designate a flexible structure such as a cable or wire. In some advantageous embodiments, these supports are indeed cables tensioned between the holders and, in some even more advantageous embodiments, the supports are formed by two parallel portions of a single cable running in closed loop between the holders. The two parallel portions of the support can thus be two different rigid elements aligned parallel to each other or two different flexible parallel elements or two parallel portions of a single element running between the holders.

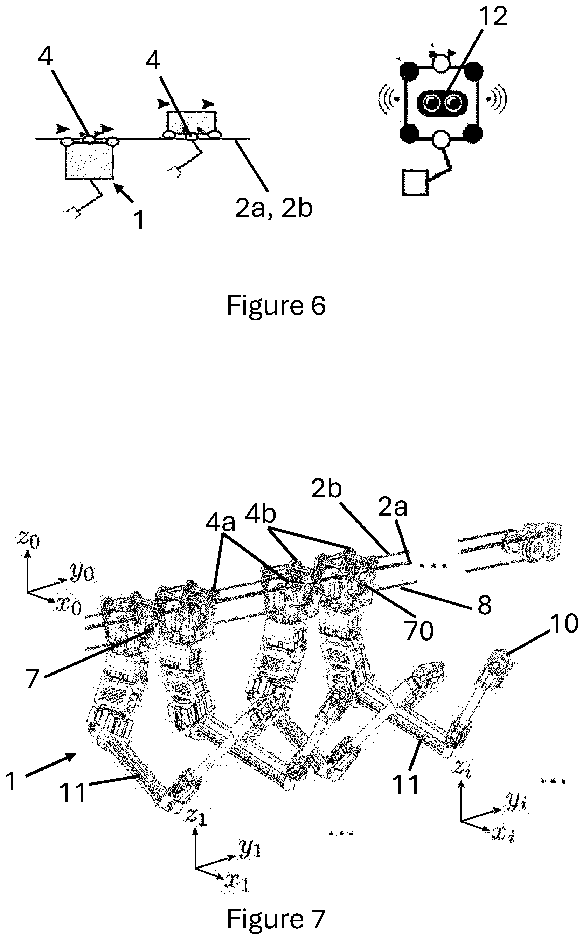

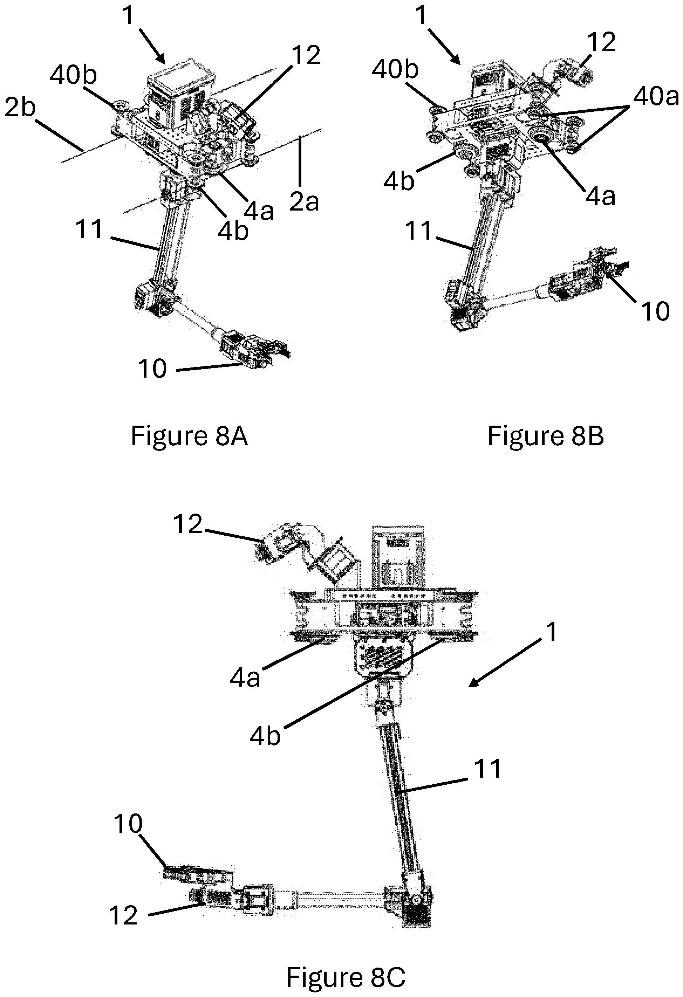

In some embodiments, the robotic system comprises a parallel portions are formed by parts of at least a first support (2a) and a second support (2b) stationary attached between said holders (3), and in that said robot (1) comprises said motor (4) bidirectionally driving at least one first wheel (4a) for displacing said robot (1) along said first support (2a), and at least one second wheel (4b) for stabilizing said robot (1) by running on said second support (2b). Non limiting examples of such embodiments are shown in figures 6, 7, 8A, 8B, 8C and 10

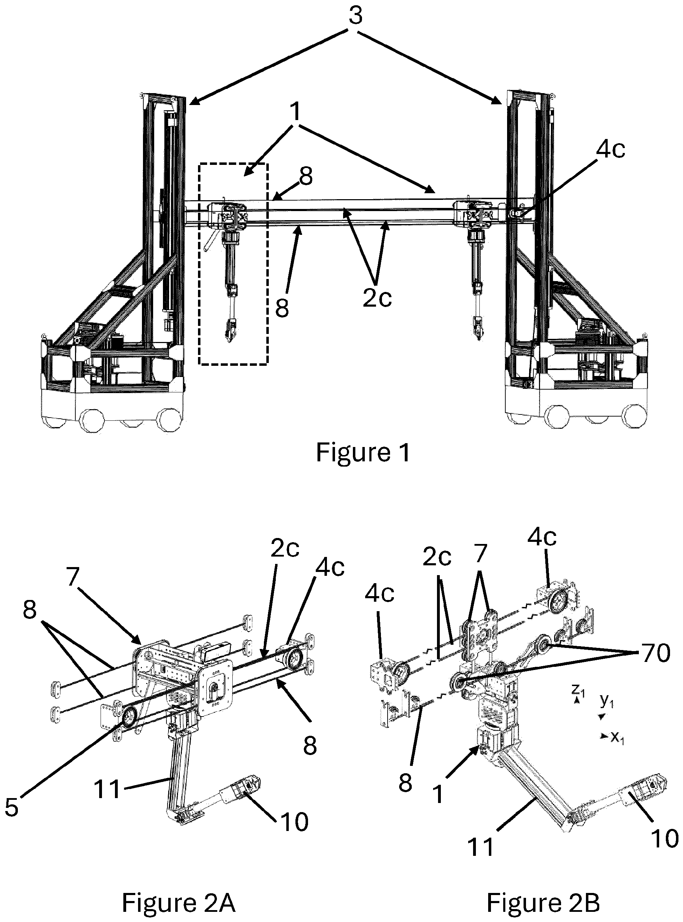

In some embodiments, said parallel portions are formed by parts of a running cable (2c) movably tensioned between at least one first pulley (4c) driven by said motor and at least one second pulley (5), said robot (1) comprising at least one switching clamp (6) for alternatively clamping or releasing one of said parallel portions running in opposite directions, for displacing said robot (1) on either one of said opposite directions. Non limiting examples of such embodiments are shown in figures 1, 2A, 2B, 3, 5 and 9).

These two embodiments are different and generally exclusive from each other but the invention can also comprise a combination of these embodiments, which share at least some common features and some of their advantages over the prior art are similar. Indeed, it is possible to design robots having both motorized wheels and a clamping mechanism operatively controlled in synchronization with motors driving the cables and some freely rolling wheels (which may be the motorized ones but in a disengaged mode). In fact, in some cases, for example if the cables are inclined or separated by a large distance resulting in a U shape (with two inclined sections around a mainly horizontal section), it can be advantageous to have robots able to run by themselves on static cables but also to hang a running cable thanks to a clamping mechanism. Therefore, the various embodiments can be combined and the number of cables and motors necessary for the operations of the robots will be adapted according to the needs. The control unit (or units) will thus synchronize the operations of the motorized cables, the motorized wheels of the robots and the clamping mechanism, preferably according to the locations of the robots within the operating field.

It will be understood that various embodiments of the present application discloses new systems providing at least the following advantages:
- Obtaining a versatile system usable in various applications by exchangeable end-effector arms with various tools thereon, such as clamps, crops, drills, brushes etc.
- Addressing limitations in current UGVs, UAVs, and CDPRs for manipulation tasks, such as in agriculture or for biological samples or any repetitive tasks.
- Obtaining a simple yet effective end-effector design incorporating a fast-switching clamping function.

To enable cooperative manipulation tasks for large-scale operations, the present application proposes various embodiments of a new system featuring multiple cable-driven Collaborative Agricultural Floating End-effectors (CAFEs), some embodiments of which are illustrated in the nonlimiting figures. Designed for large-scale agricultural applications, this system leverages the benefits of Skycam and UGV cable robots, while incorporating a simple clamping mechanism that enables large space operations with multiple-independently controlled CAFEs. Compared with UAV systems, the proposed system features multiple comprehensive end-effector, including a light weight modular robotic arm, facilitating access to narrow areas in hydroponic, aeroponic, and traditional farming. Moreover, it enables collaboration among multiple end-effectors in ways that existing CDPRs cannot achieve, while the proposed driving mechanism allows for dexterous movement with localized individual end-effectors.

The subsequent sections will introduce some non-limiting examples of some embodiments of the proposed robotic system's model and schematic, the methodology governing its control, the clamping mechanism featuring the attached robotic arm, and experiments for evaluating performance.

In some embodiments, said robot (1) comprises at least two first stabilizing wheels (7) freely rolling on said running cable (2c), each on one of said parallel portions, for stabilizing said robot (1).

In some embodiments, said robot (1) comprises a stabilizing support (8) stationary tensioned between said holders (3) and in that said robot (1) comprises at least one second stabilizing wheel (70) freely rolling on said stabilizing support (8) during displacements of said robot (1) along said parallel portions.

In some embodiments, said robot further comprises a stabilizing clamp (9) for alternatively clamping or releasing said stabilizing support (8), when said switching clamp (6) respectively releases or clamps one of said parallel portions running in opposite directions.

In some embodiments, said robot (1) comprises a second camera (12) on said arm (11) or said end-effector (10), for enabling said processing unit (13) to control the manipulation at the end-effector.

In some embodiments, said end-effector (10) is exchangeable on said arm (11), for varying the manipulation tasks performed by said robot (1).

In some embodiments, said at least one support (2a, 2b, 2c) attached between said spaced-apart holders (3) is movable along the vertical direction, by at least one winch at each of said holders, controlled by said processing unit (13).

In some embodiments, said holders (3) are mobile and controlled by said processing unit (13), to displace said system in its environment and to position said robot (1) at a location where manipulation of objects is desired.

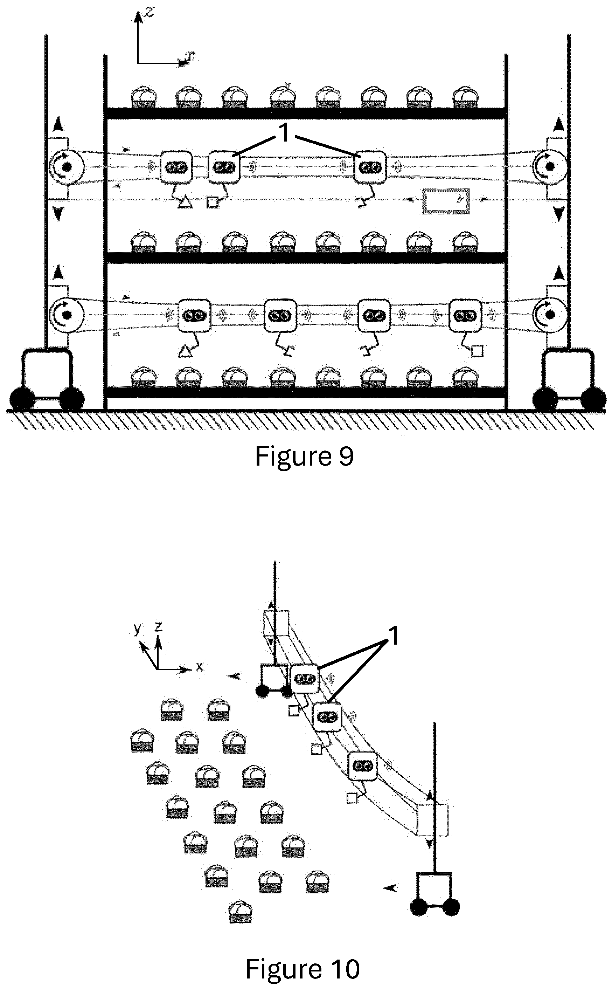

It should be noted that the embodiments allowing movements of the cables (and the robot suspended thereon) in the vertical direction, thanks to motorized holders (for example as illustrated in figure 9) can be combined with embodiments allowing movements of the holders holding the cables in at least one horizontal direction (for example as illustrated in figure 10). For example, such system can be used to harvest fruits hanging on trees arranged in rows and the system will thus be able to move vertically along one face of the trees of each row to harvest the fruits thereon and to move above the row to harvest fruits on the opposite face and move to the next row.

Multiple embodiments of the invention have been successfully implemented, focusing on controlling the motion of the robotic manipulator. This includes precise control of several robots and the pick-and-place motion of the robotic arm. Additionally, the present invention provides original control algorithms and communication protocols between the elements of the system, in particular between distinct robots suspended on the same cables, so as to act synergically. In such embodiments, the processing unit (i.e., the control unit) will adapt the control of the two robots to each other, by aligning them according to their centre of gravity which will depend on their positions but also the configuration and position of their arms. Two robot can thus be used to work synergically for a same task, like with one robot cropping fruits and the other robot holding a recipient to collect the cropped fruits, but they can also be controlled for a task requiring an antagonist behavior of the two robots, for example by both pulling on a same object to separate in two. In the latter case of an antagonist behavior, the control unit will also compensate the control of one robot according to the effects imparted on it by the other robot and choose the best relative positions of both robots for performing the task. Indeed, because the weight and force of the robots are important compared to the light and easily implemented supports, the control of the robots preferably takes these parameters. In the same spirit, some embodiments of the robots, a counterweight (19) is added on the robot, preferably away from the arm, to compensate for the weight of the arm which may be extended away from the robot and thus require stabilization by such counterweight. Figure 2a shows an example of robot having a counterweight (19) which is attached on the robot and may be movable in all directions of space, with an eventual regulation of the position of a weight on a mobile bar holding this weight.

The functionality of these control algorithms was validated, showcasing the effectiveness of the implemented solutions. In particular, thanks to the quite simple arrangements and configurations designed for the movements of the robots, the control unit can have lower computing resources than necessary for other systems in the prior art, because controlling the pulleys or wheels and clamping mechanisms involves generally less parameters than those in the prior art. The control unit (or another dedicated one) can also be designed to include algorithms for controlling the arms of the robots in an autonomous manner. For example, when the robots are equipped with a camera, some algorithms can be used for a fully automatic and autonomous harvesting or manipulation of sample, with dedicated parameters for image recognition and actions to be performed. In other embodiments, the robots can be controlled through an interface allowing their supervision by a (human) user, for example in case of failure of some tasks in the autonomous embodiments. In addition, fully supervised embodiments are also possible by providing an interface for a (human) user having actuators controlling the movements of the robots (by their motorized wheels or by running cables and switching clamps) and/or the movements and actions performed by the arms of the robots (by controlling their motorized hinges and/or the controllable tools mounted at the free end of the arms). A user can thus use its hands and/or feet and/or voice and/or eyes to control the various parts of the system, through a dedicated interface communicating with the control unit.

To enable cooperative manipulation tasks for large-scale operations, the present application proposes a new system featuring multiple cable-driven Collaborative Agricultural Floating End-effectors (CAFEs), some embodiments of which are illustrated in the nonlimiting figures. Designed for large-scale agricultural applications, this system leverages the benefits of Skycam and UGV cable robots, while incorporating a simple clamping mechanism that enables large space operations with multiple-independently controlled CAFEs. Compared with UAV systems, the proposed system features multiple comprehensive end-effector, including a light weight modular robotic arm, facilitating access to narrow areas in hydroponic, aeroponic, and traditional farming. Moreover, it enables collaboration among multiple end-effectors in ways that existing CDPRs cannot achieve, while the proposed driving mechanism allows for dexterous movement with localized individual end-effectors.

The subsequent sections will introduce some non-limiting examples of the proposed robotic system's model and schematic, the methodology governing its control, the clamping mechanism featuring the attached robotic arm, and experiments for evaluating performance. Any of the following features, components, elements, device etc. are described in reference to various embodiments of the invention which is not limited to these examples but rather covers the various alternatives described above.

To minimize the influence of undulating terrain, the system consists of two mobile platforms on the ground with linear rails for motion in the x-direction and vertical reconfiguration of parallel cable sets in the z-direction. Some embodiments use a switch clamping mechanism (illustrated in Figure 3 with more details about its various positions in figures 4A, 4B and 4C), with each set of parallel cables enabling continuous rolling for displacement along the cable. It is worth to notice that the parallel cable sets can be inclined due to the undulating terrain. Also, it is assumed the parallel cables are considered stiff, with pretension applied to the system. In order to facilitate the operation of multiple CAFEs on same cable sets, it is essential to ensure their ability to move and remain stay at any positions, especially in the presence of incline angles caused by undulating terrain. Unlike the Skycam mechanism, which relies on the actuators, tensioners and encoders working together to roll on the cables, the clamping mechanism offers a simpler and more efficient approach, particularly on inclines. The clamping mechanism can produce more friction using deformable material, even without high cable tension. Moreover, while rolling mechanisms may struggle to maintain position on inclines, the proposed clamping mechanism can securely hold its position when needed without any additional control. In application, the switch-clamping mechanism requires both a continuously moving and fixed cable set. The switching time between any two clamping states in the current design depends on the rotation speed of the toggle motor. It is worth noting that the state-switching time will affect the robot's agility in motion and the clamping angle offset is 90°. Such constraints need to be considered in the calculation of the robot's kinematic control.

The floating platform, incorporates key components such as pulleys, a toggle motor with clamping mechanism, a depth camera, and a counterbalancing mechanism. It serves a dual purpose: navigating towards the target region using feedback from the depth camera and counteracting the robotic arm's movements. Precise adjustments in the floating platform's position rely on effectively controlling the above variables. In addition, it's important to note that precise positioning of the floating platform may not always be critical for the applications. This is because the depth camera furnishes feedback data to delineate the target position of the robotic arm, which should be able to compensate the minor position errors from the floating platform.

The system includes a robotic arm control because each floating platform is also equipped with a lightweight 6-Degree-of-Freedom (DoF) robotic arm. By solving the kinematic problem for each robotic arm, the target pose can be reached according to dedicated algorithms. However, the switch-clamping mechanism will introduce time delays in the closed-loop control system. To mitigate this, constraints can be added when computing the inverse kinematics.

Multiple CAFEs can be deployed to form a scalable system with task sharing. For repetitive tasks like seeding and inspection, individual and synchronous operation modes can minimize time consumption. Conversely, for intricate tasks such as harvesting, multiple CAFEs can collaborate to accomplish the task. Alternatively, employing teleoperation and artificial intelligence algorithms in a mixed operation mode can further enhance the functionality of the system.

Advantageously, the workspace region will be assigned based on the number of tasks. To prevent collisions, a safe distance is considered by the reachable area of the robotic arms. Additionally, collaboration among CAFEs necessitates computation of the robot's kinematics. An overall control system is thus used (in a control unit as described herein) to organize the CAFEs.

To assess the clamping firmness for incline angle caused by undulating terrain, the structure was tilted while the CAFEs moved. As anticipated, the CAFEs experienced displacement during state-switching and the pulleys were disattaching the driving cable which caused undesired wiggling. However, even with increased incline angles, they remained firmly clamped in position after the switch. Furthermore, to evaluate the collaborative difficulty between multiple CAFEs, two prototypes were assigned to perform simple transition and synchronous motions. It was observed that the interaction between the two CAFEs necessitated stable and accurate positioning of the floating platforms, particularly during cooperative transitions.

In summary, conducting series of trajectories offered a thorough assessment of the CAFE's capabilities, clamping characteristic, position precision, and relative positioning between moving platforms. The results underscore the promising mobility of the floating platform for agricultural applications. However, further refinement is required, particularly in areas such as closed-loop control, feedback integration using the depth camera, enhancements in wireless communication, waterproofing, development of robust counterbalancing algorithms, and optimization of motion planning and workspace allocation for multiple CAFEs. Moreover, the robotic arm can be tailored for the application. These refinements are crucial for the system's applicability in real-world agricultural scenarios.

The present application describes various technical features and advantages with reference to the figures and/or to various embodiments. Those skilled in the art will understand that the technical features of a given embodiment can indeed be combined with features of one or more other embodiment(s) unless the reverse is explicitly mentioned or these characteristics are incompatible or the combination does not work. In addition, the technical features described in a given embodiment can be isolated from the other features of this mode unless the reverse is explicitly mentioned, in particular because the functional considerations provided in the present application will provide a sufficient explanation so that the structural adaptations possibly necessary are within the reach of those skilled in the art. Therefore, the embodiments described in the present application should be considered by way of illustration and the invention should not be limited to the details given above.

### List of reference numbers

- 1: robot
- 2: support or cable (2a, 2b, 2c)
- 3: holder
- 4: motor
- 5: pulley
- 6: clamp
- 7: stabilizing wheels
- 8: stabilizing cable
- 9: stabilizing clamp
- 10: end-effector
- 11: arm
- 12: camera
- 13: processing unit
- 19: counterweight
- 70: stabilizing wheel

## Claims

1. A robotic system for manipulation of objects, for example harvesting agricultural products, comprising at least one robot (1) that comprises at least one end-effector (10) movable in space by at least one arm (11), said end-effector (10) being suitable holding and/or cropping objects such as agricultural products, at least one camera (12) to capture images of the environment of the robot (1) and at least one processing unit (13) controlling the movements of the end-effector (10) and said arm (11), based on images of said camera (12) and on a predetermined manipulation task,
said system being **characterized in that** it comprises
- at least one support (2a, 2b, 2c) tensioned between at least two spaced-apart holders (3) and on which said at least one robot (1) is hanging,
- at least one motor (4a, 4b, 4c, 4d) for driving relative movements between said robot (1) and parallel portions of said at least one support (2a, 2b, 2c).

2. A robotic system according to claim 1, **characterized in that** it comprises at least two robots (1) synergically controlled by said at least one processing unit (13).

3. A robotic system according to claim 1 or 2, **characterized in that** said parallel portions are formed by parts of at least a first support (2a) and a second support (2b) firmly attached between said holders (3), and **in that** said robot (1) comprises said motor (4) bidirectionally driving at least one first wheel (4a) for displacing said robot (1) along said first support (2a), and at least one second wheel (4b) for stabilizing said robot (1) by running on said second support (2b).

4. A robotic system according to claim 1 or 2, **characterized in that** said parallel portions are formed by two parts of a running cable (2c) movably tensioned between at least one first pulley (4c) driven by said motor and at least one second pulley (5), said robot (1) comprising at least one switching clamp (6) for alternatively clamping or releasing one of said parallel portions running in opposite directions, for displacing said robot (1) on either one of said opposite directions.

5. A robotic system according to claim 4, **characterized in that** said robot (1) comprises at least two first stabilizing wheels (7) freely rolling on said running cable (2c), each on one of said parallel portions, for stabilizing said robot (1).

6. A robotic system according to any one of the preceding claims, **characterized in that** it further comprises a stabilizing support (8) stationary attached between said holders (3) and **in that** said robot (1) comprises at least one second stabilizing wheel (70) freely rolling on said stabilizing support (8) during displacements of said robot (1) along said parallel portions.

7. A robotic system according to claim 6, **characterized in that** said robot further comprises a stabilizing clamp (9) for alternatively clamping or releasing said stabilizing support (8), when said switching clamp (6) respectively releases or clamps one of said parallel portions running in opposite directions.

8. A robotic system according to any one of the preceding claims, **characterized in that** said robot (1) comprises a second camera (12) on said arm (11) or said end-effector (10), for enabling said processing unit (13) to control the manipulation at the end-effector.

9. A robotic system according to any one of the preceding claims, **characterized in that** said end-effector (10) is exchangeable on said arm (11), for varying the manipulation tasks performed by said robot (1).

10. A robotic system according to any one of the preceding claims, **characterized in that** said at least one support (2a, 2b, 2c) tensioned between said spaced-apart holders (3) is movable along the vertical direction, by at least one winch at each of said holders (3), controlled by said processing unit (13).

11. A robotic system according to any one of the preceding claims, **characterized in that** said holders (3) are mobile and controlled by said processing unit (13), to displace said system in its environment and to position said robot (1) at a location where manipulation of objects is desired.
